# EUROPÄISCHE PATENTSCHRIFT

(11) **EP 1 344 052 B1**
(45) Veröffentlichungstag und Bekanntmachung des Hinweises auf die Patenterteilung: **17.09.2008**
(21) Anmeldenummer: 01940228.8
(22) Anmeldetag: 12.05.2001
(51) Int. Cl.: G01N 29/22, G01N 29/24

(54) **VERFAHREN UND ROLLENPRÜFKOPF ZUR ULTRASCHALLPRÜFUNG VON ÜBERLAPPSCHWEISSNAEHTEN ZWISCHEN BLECHEN NACH DEM IMPULSVERFAHREN**
METHOD AND REVOLVING PROBE HEAD FOR ULTRASOUND MONITORING OF OVERLAPPING WELDED JOINTS BETWEEN SHEETS BY THE IMPULSE METHOD
PROCEDE ET PALPEUR A ROULEAU POUR L'EXAMEN PAR ULTRASONS DE CORDONS DE SOUDURE A RECOUVREMENT ENTRE DES TOLES SELON LA TECHNIQUE DES IMPULSIONS

(30) Priorität: 15.12.2000 DE 10062722
(43) Veröffentlichungstag der Anmeldung: 17.09.2003
(73) Patentinhaber: Agfa NDT GmbH, D-50354 Hürth (DE)
(72) Erfinder: WAGNER, Joachim, 50226 Frechen (DE); WOLLNY, Peter, 40822 Mettmann (DE)
(74) Vertreter: Bauer, Wulf
(86) Internationale Anmeldenummer: PCT/DE2001/001822
(87) Internationale Veröffentlichungsnummer: WO 2002/048704

(56) Entgegenhaltungen:
- DE-A- 19 512 176
- US-A- 4 174 636
- US-A- 4 719 801
- PATENT ABSTRACTS OF JAPAN vol. 1996, no. 11, 29. November 1996 (1996-11-29) & JP 08 184583 A (KAWASAKI STEEL CORP;YOSHIDA SOKKI:KK), 16. Juli 1996 (1996-07-16)

## Beschreibung

Die Erfindung bezieht sich auf ein Verfahren zur Ultraschallprüfung von Überlappschweissnähten zwischen einem ersten Blech und einem zweiten Blech sowie auf eine Vorrichtung zur Durchführung dieses Verfahrens.

Aus Patent Abstracts of Japan, vol. 1966, no. 11, 29. November 1996 & JP 08 184583 ist eine Vorrichtung zur Ultraschallprüfung von geschweißten Gegenständen bekannt, die Vorrichtung weist auf ein Gestell und einen Rollenprüfkopf, der a) einen Achskörper aufweist, der drehfest an einem Gestell gehalten ist und eine Ausnehmung aufweist, der b) einen Ultraschallschwinger hat, der einen Hauptstrahl hat und in der Ausnehmung des Achskörpers angeordnet ist, wobei sein Hauptstrahl in einem Winkel zur ersten Achslinie verläuft und der c) einen Reifen hat, der sich außerhalb des Ultraschallschwingers am Achskörper befindet und durch den der Hauptstrahl hindurchläuft.

Für die Prüfung von Blechschweissnähten sind mehrere Verfahren und Vorrichtungen bekannt, verwiesen wird auf das DE-Buch J. Krautkrämer und H. Krautkrämer "Werkstoffprüfung mit Ultraschall" 4. Auflage. Danach ist es zur Ultraschallprüfung von Schweissnähten zwischen einem ersten und einem zweiten Blech nach dem Impulsverfahren bekannt, einen ersten Winkelprüfkopf an das erste Blech anzukoppeln, sodass sich im ersten Blech eine Transversalwelle bildet, die durch die Schweissnaht hindurchläuft und von einem im wesentlichen baugleichen Winkelprüfkopf auf der anderen Seite der Schweissnaht und damit auf dem zweiten Blech aufgenommen wird. Es wird also mit Durchschallung gearbeitet. Das Maß der Durchschallung ist ein Maß für die Ausbildung und Güte der Schweissnaht. Es sind bereits auch Vorrichtungen für derartige Prüfungen bekannt, bei denen die beiden Winkelprüfköpfe an einem Gestell angeordnet sind, sodass die Prüfköpfe nicht einzeln bewegt werden müssen.

Nachteilig bei den vorbekannten Verfahren und Vorrichtungen ist aber die Ankopplung. Sie geschieht mittels einer Koppelflüssigkeit, beispielsweise Wasser. Eine derartige Koppelflüssigkeit benetzt notwendigerweise die bei den Bleche. Die Koppelflüssigkeit muss nicht nur wieder von den Blechen entfernt werden, sie muss auch aufgefangen werden. Bei der Prüfung von Blechen, die mittels einer Überlappschweissnaht miteinander verbunden sind, lässt sich ein flüssiges Koppelmittel nicht immer einsetzen oder wird gar vom verarbeitenden Betrieb abgelehnt. Insoweit besteht oftmals ein Problem, eine verarbeitende Firma zu überzeugen, eine Ultraschallprüfung durchzuführen.

In der Automobilindustrie kommt es auf eine ausreichende Verbindung zweier zu verbindender Bleche sehr an, da die Qualität und Sicherheit des Fahrzeuges durch die Ausbildung der einzelnen Schweissnähte bestimmt ist. Dabei tritt aber folgendes Problem auf. Die durch eine Schweissnaht verbundenen Bleche müssen vor dem Lackieren geprüft werden, wenn man überhaupt eine Möglichkeit haben will, eine Schweissnaht noch einmal nachzuarbeiten. Durch die Prüfung dürfen aber die Bleche nicht so beeinflusst und insbesondere verschmutzt werden, dass eine aufwendige Nacharbeitung vor der Lackierung notwendig ist, insbesondere der Lack an den Bereichen, die mit einem Prüfkopf überfahren wurden und mit einem Koppelmittel in Kontakt kamen, nicht mehr so gut haftet wie an anderen Stellen des Bleches.

Hier setzt nun die Erfindung ein. Sie hat es sich zur Aufgabe gemacht, die bekannten Verfahren und Vorrichtungen zur Prüfung von Schweissnähten zwischen zwei Blechen, insbesondere die Prüfung einer Überlappschweissnaht von zwei Blechen, so zu verbessern und weiterzuentwickeln, dass eine sichere Erkennung auch kleinerer Schweissnähte, insbesondere Laserschweissnähte, erreicht wird, auf ein flüssiges Ankopplungsmittel verzichtet werden kann und sichergestellt ist, dass durch den Kontakt zwischen Prüfkopf und Blech das spätere Lackieren oder eine andere Oberflächenbehandlung nicht beeinträchtigt wird.

Verfahrensmässig wird diese Aufgabe gelöst durch ein Verfahren zur Ultraschallprüfung von Überlappschweissnähten zwischen einem ersten Blech und einem zweiten Blech mit folgenden Verfahrensschritten
- Einschallen von Impulsen in einem Winkel zwischen 15 und 80° zu einer Oberfläche des ersten Bleches und Erzeugen einer Transversalwelle in dem ersten Blech mittels eines ersten Rollenprüfkopfes, der a) an einem Gestell angeordnet ist, der b) einen gegenüber dem Gestell drehfesten Achskörper hat, welcher eine erste Achslinie definiert, die im wesentlichen parallel zur Oberfläche des ersten Blechs verläuft, der c) einen Ultraschallschwinger aufweist, der an dem Achskörper befestigt ist und der d) einen um den Achskörper drehbaren Reifen hat, der an den Ultraschallschwinger angekoppelt ist und auf dem ersten Blech parallel zur Überlappschweissnaht abrollt,
- Durchschallen der Überlappschweissnaht mittels der Impulse und
- Empfangen der durch die Überlappschweissnaht in das zweite Blech hinübergetretenen Impulse mit einem empfangenden zweiten Rollenprüfkopf, der a) am Gestell angeordnet ist, der b) einen gegenüber dem Gestell drehfesten Achskörper hat, welcher eine Achslinie definiert, die im wesentlichen parallel zur Oberfläche des zweiten Blechs verläuft, der c) einen Ultraschallschwinger aufweist, der am Achskörper angeordnet ist, und der d) einen um den Achskörper drehbaren Reifen hat, der an den Ultraschallschwinger angekoppelt ist und auf dem zweiten Blech parallel zur Überlappschweissnaht abrollt, und
- Auswerten der empfangenen Impulse.

Vorrichtungsmässig wird diese Aufgabe gelöst durch eine Vorrichtung zur Ultraschallprüfung von Überlappschweissnähten zwischen einem ersten Blech und einem zweiten Blech nach dem Impulsverfahren, die Vorrichtung weist auf
- ein Gestell
- einen ersten Rollenprüfkopf, der a) einen Achskörper aufweist, welcher drehfest am Gestell gehalten ist, der b) einen Ultraschallschwinger hat, der einen Hauptstrahl hat und in einer Ausnehmung des Achskörpers angeordnet ist, wobei sein Hauptstrahl in einem Winkel zwischen 15 und 80° zur Achslinie verläuft und der c) einen Reifen hat, der sich ausserhalb des Ultraschallschwingers am Achskörper befindet und durch den der Hauptstrahl hindurchläuft und
- einen zweiten Rollenprüfkopf, der a) einen Achskörper aufweist, welcher drehfest am Gestell angeordnet ist und eine Aufnehmung aufweist, der b) einen Ultraschallschwinger hat, der einen Hauptstrahl aufweist und in der Ausnehmung so angeordnet ist, dass sein Hauptstrahl im Winkel von 15 bis 80° zur Achslinie verläuft und der c) einen Reifen hat, der sich ausserhalb des Ultraschallschwingers am zweiten Achskörper befindet und durch den der Hauptstrahl hindurchläuft.

Mittels der Rollenprüfköpfe wird eine trockene Ankopplung an die Bleche erreicht. Damit kann auf ein flüssiges Ankopplungsmittel verzichtet werden. Bei Auswahl eines geeigneten Materials für die Reifen, beispielsweise Polyurethan oder Gummi in einer weichen Einstellung, wird erreicht, dass die Oberflächen der Bleche dort, wo sie mit dem Rollenprüfkopf in Kontakt kommen, praktisch nicht beeinflusst werden, jedenfalls der abrollende Reifen keinerlei Spuren hinterlässt, die eine spätere Nachbehandlung, wie ein Lackieren oder Oberflächenveredelung, beeinträchtigen würden.

Erfindungsgemäss lassen sich insbesondere Schweissnähte im Dachbereich von Kraftfahrzeugkarosserien prüfen, beispielsweise in Nähe einer Regenrinne. Hierbei ist durch die Rinne eine Führung des Gestells, an dem die Rollenprüfköpfe angeordnet sind, möglich.

Es ist wichtig, immer möglichst gleiche Einschallbedingungen und Austrittsbedingungen für die Ultraschallimpulse zu erreichen. Dies wird durch eine möglichst gleichmässige und linienhafte Anlage der beiden Reifen über die gesamte Prüfstrecke erreicht. Das Gestell ist entsprechend ausgelegt und ermöglicht eine über den Prüfweg eine konstante Anlage der Reifen.

Nun sind zwar aus dem Stand der Technik Rollenprüfköpfe bekannt, diese sind aber wie ein normaler Fahrzeugreifen ausgebildet und anstelle von Druckluft mit Wasser gefüllt. Der Abstand zwischen einem Schwinger und der Eintrittsfläche vom Reifen in die Oberfläche des Bleches ist stark vom Druck abhängig, mit dem der Rollenprüfkopf auf das Blech aufgedrückt wird. Damit ist aber auch die Amplitude des in ein Blech eintretenden Impulses stark von den jeweiligen Situationen beim wassergefüllten Rollenprüfkopf abhängig. Gerade bei der Durchschallung ist dies nachteilig, weil vom empfangenden Prüfkopf nicht zwischen einer Schwankung der Amplitude des eingeschalteten Eintrittsimpulses und einer Schwächung der Amplitude des Impulses bei Durchlaufen durch die Schweissnaht unterschieden werden kann.

Die Erfindung ermöglicht es, dass der Abstand zwischen dem Schwinger und der Oberfläche des Bleches praktisch über den gesamten Prüfweg konstant bleibt. Hierfür ist u.a. auch vorgesehen, dass der Reifen überall die gleiche Reifendicke hat. Aufgrund der konstanten Einschallbedingungen und der entsprechenden Bedingungen auf der Empfangsseite ermöglicht es die Erfindung, tatsächlich im wesentlichen die Schweissnaht zu erfassen. Dies begibt die Möglichkeit, auch feine Schweissnähte, wie sie beispielsweise bei der Laserschweissung vorliegen, zu prüfen.

In einer bevorzugten Ausbildung weisen die Reifen jeweils eine Felge auf, die drehbar am zugehörigen Achskörper gelagert ist und ist innerhalb der Felge ein flüssigkeitsdichter Raum gebildet. Auf diese Weise wird vom nicht mitgedrehten Ultraschallschwinger 58 der Ultraschallimpuls durch eine dünne Flüssigkeitsschicht aus einer Ankopplungsflüssigkeit hindurch in die Felge und in den Reifen übertragen. Die Drehbewegung findet zwischen der Felge und den Ultraschallschwinger bzw. dessen Vorlaufkörper statt.

In einer bevorzugten Weiterbildung ist mindestens einer der Achskörper verstellbar und/oder elastisch am Gestell angeordnet. Auf diese Weise kann sich der zugehörige Rollenprüfkopf jeweils auf die Verhältnisse der Oberfläche des Bleches einstellen bzw. er kann so eingestellt werden.

In einer weiteren Verbesserung ist mindestens eine Führungsrolle vorgesehen, die auf einem der beiden Bleche abrollt. Da die beiden Rollenprüfköpfe 28, 30 im wesentlichen auf einer Achslinie liegen, ist die Winkellage des Gestells unbestimmt. Durch die Führungsrolle wird die Winkellage des Gestells zu den Blechen vorgegeben. Bei zwei Führungsrollen ist die Position des Gestells gegenüber den Blechen allein durch die Führungsrollen gegeben und wird demzufolge der Anpressdruck der Rollenprüfköpfe konstant gehalten.

In bevorzugter Ausführung sind die beiden Ultraschallschwinger baugleich. Sie haben vorzugsweise eine Frequenz oberhalb von 1 MHz, insbesondere oberhalb von 2 MHz. Eine Frequenz von 4 MHz wird als günstig angesehen. Bei dieser Frequenz können auch kleinere Fehler in den Schweissnähten nachgewiesen werden.

Bevorzugt hat das Gestell einen Führungsschuh, der an einem parallel zur Überlappschweissnaht verlaufenden Vorsprung eines der beiden Bleche anlegbar ist. Auf diese Weise wird die Orientierung des Gestells beim Abfahren der Schweissnaht erleichtert.

In einer bevorzugten Weiterbildung befindet sich zwischen jedem Achskörper und dem zugehörigen Ultraschallschwinger eine Masse, die die Schallankopplung des Ultraschallschwingers an den Achskörper möglichst stark dämpft. Auf diese Weise wird der nach innen abgestrahlte Impuls des Ultraschallschwingers gedämpft. Weithin wird der Ultraschallschwinger zusammen mit seinem Vorlaufkörper positioniert. Schliesslich wird vermieden, dass Impulse des Ultraschallschwingers in den Achskörper gelangen.

In einer bevorzugten Ausführung ist jeder Ultraschallschwinger auf einem keilförmigen Vorlaufkörper montiert und hat dieser Vorlaufkörper eine zylindrische Mantelfläche, die mit dem Verlauf des Zylindermantels, die den zugehörigen Achskörper begrenzt, übereinstimmt. Auf diese Weise wird die Übertragung auf die sich drehende Felge erleichtert und ein konstanter Spalt zwischen Achskörper, einschliesslich seiner Einbauteile, und der Felge erzielt.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnung näher erläutert wird und zur Erläuterung des erfindungsgemässen Verfahrens dient. In der Zeichnung zeigen:
Figur 1: eine Seitenansicht einer Vorrichtung für die Ultraschallprüfung, die Ansicht erfolgt in Richtung einer Schweissnaht, die zwei Bleche verbindet,
Figur 2: eine Vordersicht der Vorrichtung gemäss Figur 1,
Figur 3: ein Schnittbild durch einen Rollenprüfkopf,
Figur 4: ein Schnittbild durch einen Achskörper entlang der Schnittlinie IV-IV in Fig. 5, mit eingesetztem Schwinger und Vorlaufkörper eines Rollenprüfkopfes gemäss Figur 3,
Figur 5: eine Ansicht, teilweise schnittbildlich, in Axialrichtung der Baugruppe gemäss Figur 4 und
Figur 6: eine Draufsicht auf die Baugruppe gemäss Figur 4.

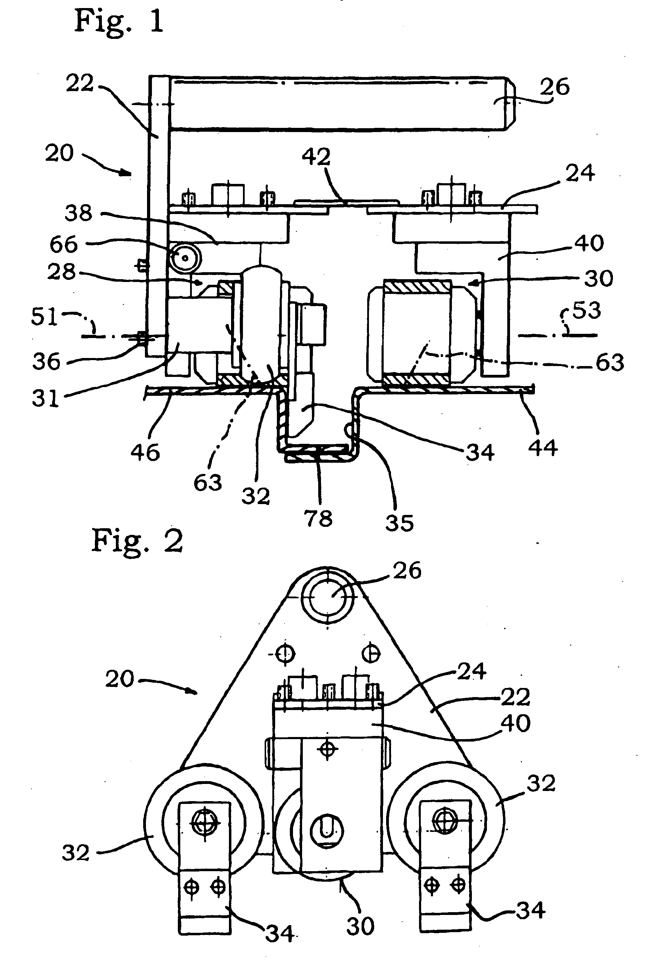

Das aus den Figuren 1 und 2 ersichtliche Gestell besteht im wesentlichen aus einem Hauptkörper 22 in Form einer dreieckförmigen Platte und einem quer zu diesem verlaufenden Tragbalken 24. Am Hauptkörper 22 ist ein Handgriff 26 befestigt, der sich in Richtung des Tragbalkens 24 erstreckt. Der Tragbalken 24 springt etwa von der Mitte des Hauptkörpers 22 vor und dient der Halterung von zwei Rollenprüfköpfen 28, 30. In Nähe der unteren Dreiecksecken springen vom Hauptkörper 22 Achsstummel 31 vor, auf denen jeweils eine Führungsrolle 32 drehbar gelagert ist. Am freien Ende dieser Achsstummel 31 ist jeweils ein Führungsschuh 34 befestigt, er springt nach unten vor und greift beispielsweise in eine Regenrinne 35 eines Dachs einer Kraftfahrzeugkarosserie. Die Führungsrollen 32 und separat hiervon die Führungsschuhe 34 sind verstellbar, insbesondere zumindest höheneinstellbar. Die Führungsschuhe 34 können auch austauschbar sein. Um die Höhe der Führungsrollen 32 ändern zu können, greift eine Befestigungsschraube 36 exzentrisch in den Achsstummel 31 ein, aus Figur 1 ist dies zu ersehen. Durch Lösen der Befestigungsschraube 36 und Drehen des Achsstummels 31 kann die Höhe der Führungsrolle 32 justiert werden. Alternativ kann auch ein Längsschlitz im Hauptkörper 22 für die Befestigung des Achsstummels 31 vorgesehen sein. Am Tragbalken 24 sind zwei Haltevorrichtungen 38, 40 für die Rollenprüfköpfe 28, 30 angebracht. Zwischen ihnen hat der Tragbalken eine Blattfeder 42. Durch sie wird es ermöglicht, dass die äussere Haltevorrichtung 40 sich innerhalb eines gewissen Bereichs gegenüber der inneren Haltevorrichtung 38 bewegen kann. Alternativ könnte man auch eine kardanische Aufhängung für den in Fig. 1 äußeren Rollenprüfkopf 30 vorsehen. Erreicht werden soll insgesamt, dass die beiden Rollenprüfköpfe jeweils möglichst gut auf den zu prüfenden Blechen 44, 46 aufliegen. Bei einer starren Halterung der beiden Haltevorrichtungen 38, 40 könnten die Rollenprüfköpfe 28, 30 nicht Abweichungen in den Blechen 44, 46 von einer idealen Ebene folgen.

Die Haltevorrichtungen 38, 40 sind im einzelnen in zumindest einer Raumrichtung, vorzugsweise in allen drei Raumrichtungen justierbar, sodass die zugehörigen Rollenprüfköpfe 28, 30 optimal in Anlage an die zu prüfenden Bleche 44, 46 eingestellt werden können. Auf eine Verstellung der ersten Haltevorrichtung 38 kann man verzichten, wenn die zweite Haltevorrichtung 40 in allen drei Raumrichtungen einstellbar ist.

Es wird nun auf den Aufbau der einzelnen Rollenprüfköpfe 28, 30 eingegangen. Die beiden Rollenprüfköpfe 28,30 sind baugleich. Im folgenden wird nur der erste Rollenprüfkopf 28 beschrieben. Da der zweite Rollenprüfkopf 30 baugleich mit dem ersten ist, gelten alle Ausführungen auch für ihn, es muss aber jeweils dann immer das Adjektiv "erste bzw. erster" ersetzt werden durch "zweite bzw. zweiter".

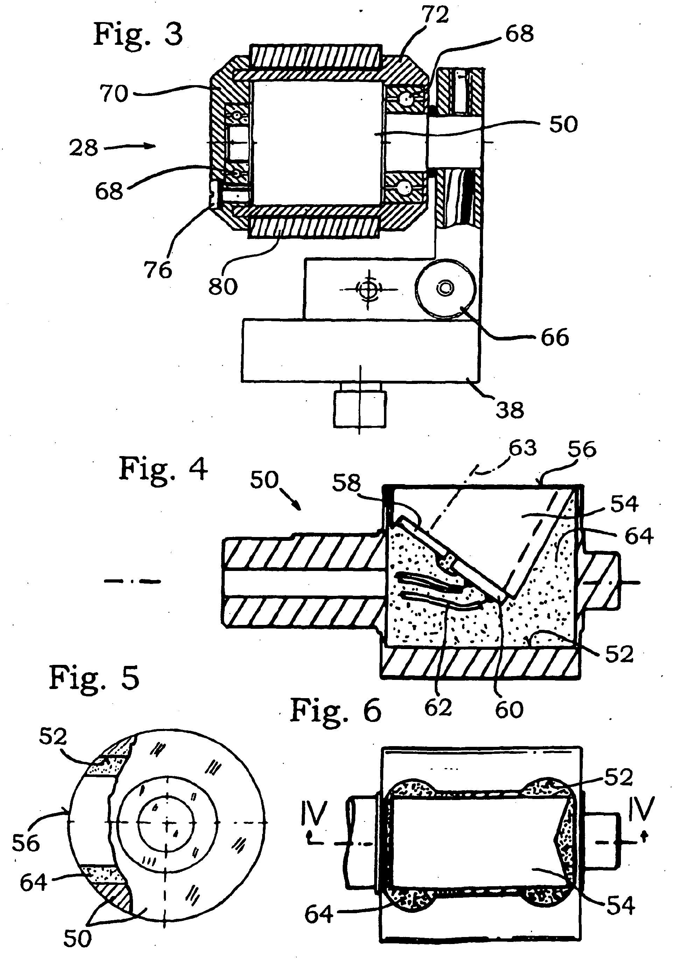

Wie die Figuren 3 und 4 zeigen, haben die Rollenprüfköpfe jeweils einen Achskörper 50, der mit seinem in den Figuren rechten Endbereich in der zugehörigen Haltevorrichtung, hier 38, festgelegt ist. Dadurch ist der Achskörper 50 drehstarr mit der Haltevorrichtung und damit auch dem Hauptkörper 22 verbunden. Der Achskörper 50 des Rollenprüfkopfs 28 definiert eine erste Achslinie 51, die parallel zum Blech 44 verläuft. Ebenso definiert der Achskörper 50 des Rollenprüfkopfs 30 eine zweite Achslinie 53, die parallel zum zweiten Blech 46 verläuft.

Wie insbesondere die Figuren 4 und 6 zeigen, hat der Achskörper 52 eine relativ grosse Ausnehmung 52. Sie hat im wesentlichen die Form eines Kubus, der von einer Mantelfläche radial nach innen eingearbeitet ist und sich fast über den gesamten Durchmesser des mittleren Zylinderstücks des Achskörpers 50 erstreckt.

In der Ausnehmung 52 befindet sich ein im wesentlichen keilförmiger Vorlaufkörper 54. Er ist so eingepasst und bearbeitet, dass seine aussen sichtbare Mantelfläche 56 exakt auf dem Zylindermantel liegt, der den Achskörper 50 begrenzt. Dies ist aus Figur 5 ersichtlich. Auf einer Ankoppelfläche des Vorlaufkörpers 54 ist ein erster Ultraschallschwinger 58 aufgeklebt. Der Keilwinkel des Vorlaufkörpers 54 liegt bei etwa 37°. Neben dem ersten Ultraschallschwinger 38 ist auf dieselbe Fläche des Vorlaufkörpers 54 ein Lötstützpunkt 60 aufgeklebt, an ihn ist der erste Ultraschallschwinger 58 und sind die Anschlussleitungen 62 angeschlossen. Der erste Ultraschallschwinger 58 ist ein Composite-Schwinger mit einer Frequenz von 4 MHz. Er hat die Form einer Kreisscheibe, der Durchmesser beträgt 5 mm. Sein Hauptstrahl ist mit 63 bezeichnet.

Der Vorlaufkörper 54 hat eine V-förmige Nut, die in Figur 4 gestrichelt eingezeichnet ist. Durch sie werden stehende Wellen im Vorlaufkörper 54 vermieden. Der Vorlaufkörper ist aus Acryl gefertigt.

Der Vorlaufkörper 54 mit dem Ultraschallschwinger 58 und den weiteren Teilen ist mittels einer Masse 64 in der Ausnehmung 52 eingebettet. Diese Masse hat stark absorbierende Eigenschaften und vermeidet, dass der Ultraschallschwinger 58 an den Achskörper 50 angekoppelt wird. Insbesondere soll der nach rückwärts abgesandte Impuls des Ultraschallschwingers 58 gedämpft werden und damit ohne Wirkung sein. Die Masse 64 lässt sich giessen und erstarrt anschliessend. Sie besteht vorzugsweise aus einem Kunststoff, der in bekannter Weise vermischt ist mit kleineren Bestandteilen, beispielsweise Metallpartikeln. In die Masse 64 sind auch die Anschlussleitungen 62 eingebettet. Sie sind durch eine zentrale Bohrung und ein Fenster geführt, sodass sie in einem hohlen Innenraum der Haltevorrichtung 38 weitergeführt werden können, und zu einem Steckanschluss 66 geführt.

Wie insbesondere Figur 5 zeigt, ist auch die Masse 64 oberflächlich so begrenzt, dass sie auf dem Zylindermantel des Achskörpers 50 liegt. Insgesamt ist daher der Achskörper 50 mit seiner gefüllten Ausnehmung 52 nach aussen hin ein so gut wie es geht idealer Zylinder.

Links und rechts des Hauptbereichs, in dem sich die Ausnehmung 52 befindet, des Achskörpers 50 befinden sich konzentrische Stutzen des Achskörpers 50, auf sie sind Kugellager 68 aufgebracht. An diesen wiederum ist ein Käfig drehbar gelagert, der von einer endseitigen Kappe 70 aus Acryl und einem mehr becherförmigen Umgreifteil 72 aus Acryl gebildet wird. Er bildet eine Felge und ist nach aussen hin dicht abgeschlossen, bildet also eine innere, flüssigkeitsdichte Kammer. Das Umgreifteil 72 steht in sehr enger Nachbarschaft zum Hauptbereich des Achskörpers 50, es wird hier ein schmaler rohrförmiger Spalt freigelassen. Seine Radialabmessung ist möglichst klein, liegt z. B. unter 1 mm. Dieser Spalt und der restliche Innenraum sind mit einer Ankoppelflüssigkeit gefüllt, beispielsweise Glycerin. Sie kann am Ort einer Füllschraube 76 eingebracht werden.

Auf der Felge ist ein Reifen 80 angeordnet, er hat die Form eines Rohrabschnittes und ist aus einem weichen, gummiartigen Material gefertigt. Hier kommen insbesondere Polyurethan, natürliches oder künstliches Gummi in Frage. Die Shore Härte liegt zwischen 10 und 40, vorzugsweise bei 25-30. Das Material ist ähnlich einem Radiergummi. Wichtig ist eine gleichbleibende Dicke des Reifens 80 über den gesamten Umfang.

Beim praktischen Betrieb wird vom sendenden Rollenprüfkopf 28 mindestens ein Ultraschallimpuls, üblicherweise eine Folge von Ultraschallimpulsen, in das erste Blech 44 eingeleitet. Aufgrund des Einschallwinkels werden im ersten Blech Transversalwellen erzeugt. Diese durchlaufen eine Schweissnaht 78 zwischen den beiden Blechen 44, 46. Ist die Schweissnaht in Ordnung, durchlaufen die Impulse die Schweissnaht 58 und gelangen in das zweite Blech 46. Dort werden sie analog aufgenommen, wie sie eingeleitet wurden. Die auswertung erfolgt nach dem Stand der Technik. Verwendet werden kann ein Gerät der Baureihe USD, z.B. USD 16, der Anmelderin.

Es ist möglich, den sendenden Rollenprüfkopf 28 als empfangenden einzusetzen und den empfangenden Rollenprüfkopf 30 als Sender zu betreiben. Auch während einer laufenden Prüfung kann dieser Funktionsaustausch erfolgen.

## Patentansprüche

1. Verfahren zur Ultraschallprüfung von Überlappschweissnähten zwischen einem ersten Blech (44) und einem zweiten Blech (46) mit folgenden Verfahrensschritten
- Einschallen von Impulsen in einem Winkel zwischen 15 und 80° zu einer Oberfläche des ersten Blechs (44) und Erzeugen einer Transversalwelle in dem ersten Blech (44) mittels eines ersten Rollenprüfkopfes (28), der a) an einem Gestell (20) angeordnet ist, der b) einen gegenüber dem Gestell (20) drehfesten Achskörper (50) hat, welcher eine erste Achslinie (51) definiert, die im wesentlichen parallel zur Oberfläche des ersten Blechs (44) verläuft, der c) einen Ultraschallschwinger (58) aufweist, der an dem Achskörper (50) befestigt ist und der d) einen um den Achskörper (50) drehbaren Reifen (80) hat, der an den Ultraschallschwinger (58) angekoppelt ist und auf dem ersten Blech (44) parallel zur Überlappschweissnaht (78) abrollt,
- Durchschallen der Überlappschweissnaht (78) mittels der Impulse und
- Empfangen der durch die Überlappschweissnaht (78) in das zweite Blech (46) hinübergetretenen Impulse mit einem empfangenden zweiten Rollenprüfkopf (30), der a) am Gestell (20) angeordnet ist, der b) einen gegenüber dem Gestell (20) drehfesten Achskörper (50) hat, welcher eine zweite Achslinie (53) definiert, die im wesentlichen parallel zur Oberfläche des zweiten Blechs (46) verläuft, der c) einen Ultraschallschwinger (58) aufweist, der am Achskörper (50) angeordnet ist, und der d) einen um den Achskörper (50) drehbaren Reifen (80) hat, der an den Ultraschallschwinger (58) angekoppelt ist und auf dem zweiten Blech (46) parallel zur Überlappschweissnaht (78) abrollt, und
- Auswerten der empfangenen Impulse.

2. Vorrichtung zur Ultraschallprüfung von Überlappschweissnähten zwischen einem ersten Blech (44) und einem zweiten Blech (46) nach dem Impulsverfahren, die Vorrichtung weist auf
- ein Gestell (20)
- einen ersten Rollenprüfkopf (28), der a) einen Achskörper (50) aufweist, der drehfest am Gestell (20) gehalten ist und eine Ausnehmung (52) aufweist, der b) einen Ultraschallschwinger (58) hat, der einen Hauptstrahl (63) hat und in einer Ausnehmung (52) des Achskörpers (50) angeordnet ist, wobei sein Hauptstrahl (63) in einem Winkel zwischen 15 und 80° zur ersten Achslinie (51) verläuft und der c) einen Reifen (80) hat, der sich ausserhalb des Ultraschallschwingers (58) am Achskörper (50) befindet und durch den der Hauptstrahl (63) hindurchläuft und
- einen zweiten Rollenprüfkopf (30), der a) einen Achskörper (50) mit einer zweiten Achslinie (53) aufweist, der drehfest am Gestell (20) angeordnet ist und eine Ausnehmung (52) aufweist, der b) einen Ultraschallschwinger (58) hat, der einen Hauptstrahl (63) aufweist und in der Ausnehmung (52) so angeordnet ist, dass sein Hauptstrahl (63) in einem Winkel von 15 bis 80° zur zweiten Achslinie (53) verläuft und der c) einen Reifen (80) hat, der sich ausserhalb des Ultraschallschwingers (58) am Achskörper (50) befindet und durch den der Hauptstrahl (63) hindurchläuft.

3. Vorrichtung nach Anspruch 2, **dadurch gekennzeichnet, dass** die Reifen (80) jeweils eine Felge aufweisen, die drehbar am zugehörigen Achskörper (50) gelagert ist und dass innerhalb der Felge ein flüssigkeitsdichter Raum ausgebildet ist.

4. Vorrichtung nach Anspruch 2, **dadurch gekennzeichnet, dass** mindestens ein Achskörper (50) verstellbar und/oder elastisch am Gestell (20) angeordnet ist.

5. Vorrichtung nach Anspruch 2, **dadurch gekennzeichnet, dass** am Gestell (20) mindestens eine Führungsrolle (32) vorgesehen ist, die auf einem der beiden Bleche (44, 46) abrollt.

6. Vorrichtung nach Anspruch 2, **dadurch gekennzeichnet, dass** die Ultraschallschwinger (58) beider Rollenprüfkopfe (28,30) baugleich sind.

7. Vorrichtung nach Anspruch 2, **dadurch gekennzeichnet, dass** die Ultraschallschwinger (58) beider Rollenprüfkopfe (28,30) eine Frequenz oberhalb von 1 MHz, insbesondere oberhalb von 2 MHz aufweisen.

8. Vorrichtung nach Anspruch 2, **dadurch gekennzeichnet, dass** das Gestell (20) einen Führungsschuh (34) aufweist, der an einem parallel zur Überlappschweissnaht (78) verlaufenden Vorsprung eines der beiden Bleche (44,46) anlegbar ist.

9. Vorrichtung nach Anspruch 2, **dadurch gekennzeichnet, dass** sich zwischen jedem Achskörper (50) und dem zugehörigen Ultraschallschwinger (58) eine Masse (64) befindet, die die Schallankopplung des Ultraschallschwingers (58) an den Achskörper (50) möglichst stark dämpft.

10. Vorrichtung nach Anspruch 2, **dadurch gekennzeichnet, dass** jeder Ultraschallschwinger (58) auf einem keilförmigen Vorlaufkörper (54) montiert ist und dass dieser Vorlaufkörper (54) eine zylindrische Mantelfläche (56) hat, die mit dem Verlauf eines Zylindermantels, der den zugehörigen Achskörper (50) begrenzt, übereinstimmt.

## Claims

1. A method for the ultrasonic inspection of lap welds between a first metal sheet (44) and a second metal sheet (46), said method involving the following method steps
- emitting pulses at an angle ranging between 15 and 80° relative to a surface of the first metal sheet (44) and generating a transverse wave in the first metal sheet (44) by means of a first wheel probe (28) which a) is mounted to a frame (20), which b) has an axle body (50) that is non-rotatable relative to said frame (20), said axle body defining a first axial line (51) which is oriented substantially parallel to the surface of the first metal sheet (44), which c) is provided with an ultrasound crystal (58) fastened to the axle body (50) and which d) has a tire (80) that is rotatable about the axle body (50), is coupled to the ultrasound crystal (58) and rolls over the first metal sheet (44) parallel to the lap weld (78),
- effecting through transmission on the lap weld (78) using the pulses and
- receiving the pulses that have propagated through the lap weld (78) into the second metal sheet (46) using a receiving second wheel probe (30) which a) is mounted to the frame (20), which b) has an axle body (50) that is non-rotatable relative to said frame (20), said axle body defining a second axial line (53) which is oriented substantially parallel to the surface of the second metal sheet (46), which c) is provided with an ultrasound crystal (58) fastened to the axle body (50) and which d) has a tire (80) that is rotatable about the axle body (50), is coupled to the ultrasound crystal (58) and rolls over the second metal sheet (46) parallel to the lap weld (78), and
- evaluating the pulses received.

2. A device for the ultrasonic inspection of lap welds between a first metal sheet (44) and a second metal sheet (46) using the pulse method, said device having
- a frame (20)
- a first wheel probe (28) which a) is provided with an axle body (50) that is non-rotatably held on the frame (20) and has a recess (52), that b) has an ultrasound crystal (58) which has a main beam (63) and is disposed in a recess (52) of the axle body (50), the main beam (63) thereof being oriented at an angle ranging between 15 and 80.degree. relative to the first axial line (51) and that c) has a tire (80) which is located outside of the ultrasound crystal (58) on the axle body (50) and which Is traversed by the main beam (63) and
- a second wheel probe (30) which a) is provided with an axle body (50) with a second axial line (53) that is non-rotatably held on the frame (20) and is comprised of a recess (52), that b) has an ultrasound crystal (58) which has a main beam (63) and is disposed in said recess (52) in such a manner that the main beam (63) thereof is oriented at an angle of from 15 to 80.degree relative to the second axial line (53) and that c) has a tire (80) which is located outside of the ultrasound crystal (58) on the axle body (50) and which is traversed by the main beam (63).

3. The device of claim 2, wherein the tires (80) each have a rim that is rotatably carried on the associated axle body (50) and wherein a fluid tight space is formed within the rim.

4. The device of claim 2, wherein at least one axial body (50) is adjustably and/or elastically mounted to the frame (20).

5. The device of claim 2, wherein at least one guide roller (32) is provided on the frame (20), said guide roller rolling over one of the two metal sheets (44, 46).

6. The device of claim 2, wherein the ultrasound crystals (58) of the two wheel probes (28, 30) are built according to the same principle.

7. the device of claim 2, wherein the ultrasound crystals (58) of the two wheel probes (28, 30) have a frequency in excess of 1 MHz, more specifically in excess of 2 MHz.

8. The device of claim 2, wherein the frame (20) has a guide shoe (34) that may be placed against a projection of one of the two metal sheets (44, 46) that is oriented parallel relative to the lap weld (78).

9. The device of claim 2, wherein a mass (64) is provided between each axle body (50) and the associated ultrasound crystal (58), said mass attenuating to the greatest possible extent the sonic coupling of the ultrasound crystal (58) to the axle body (50).

10. The device of claim 2, wherein each ultrasound crystal (58) is mounted to a wedge-shaped lead body (54) and wherein said lead body (54) has a cylindrical surface area (56) that coincides with the orientation of a cylinder jacket defining the associated axle body (50).

## Revendications

1. Procédé de contrôle par ultrasons de soudures à recouvrement entre une première tôle (44) et une deuxième tôle (46), comprenant les étapes suivantes :
- émettre des impulsions à un angle compris entre 15 et 80° par rapport à une surface de ladite première tôle (44) et générer une onde transversale dans la première tôle (44) au moyen d'un premier palpeur à rouleau (28) qui a) est disposé sur un bâti (20), qui b) présente un corps axial (50) lequel est solidaire en rotation du bâti (20) et définit une première ligne axiale (51) qui s'étend pour l'essentiel parallèlement à la surface de ladite première tôle (44), qui c) comprend un transducteur à ultrasons (58) lequel est fixé sur ledit corps axial (50), et qui d) présente un bandage (80) lequel est apte à tourner autour du corps axial (50), est couplé au transducteur à ultrasons (58) et roule sur ladite première tôle (44) parallèlement à la soudure à recouvrement (78),
- réaliser la transmission sur la soudure à recouvrement (78) en utilisant les impulsions, et
- recevoir les impulsions ayant traversé la soudure à recouvrement (78) et atteint la deuxième tôle (46), au moyen d'un deuxième palpeur récepteur à rouleau (30) qui a) est disposé sur le bâti (20), qui b) présente un corps axial (50) lequel est solidaire en rotation du bâti (20) et définit une deuxième ligne axiale (53) qui s'étend pour l'essentiel parallèlement à la surface de ladite deuxième tôle (46), qui c) comprend un transducteur à ultrasons (58) lequel est disposé sur ledit corps axial (50), et qui d) présente un bandage (80) lequel est apte à tourner autour du corps axial (50), est couplé au transducteur à ultrasons (58) et roule sur ladite deuxième tôle (46) parallèlement à la soudure à recouvrement (78), et
- évaluer les impulsions reçues.

2. Dispositif de contrôle par ultrasons de soudures à recouvrement entre une première tôle (44) et une deuxième tôle (46) selon le procédé par impulsions, ledit dispositif comprenant :
- un bâti (20)
- un premier palpeur à rouleau (28) qui a) présente un corps axial (50) lequel est maintenu de manière solidaire en rotation sur ledit bâti (20) et présente un évidement (52), qui b) a un transducteur à ultrasons (58) lequel présente un rayon principal (63) et est disposé dans un évidement (52) du corps axial (50), son rayon principal (63) s'étendant à un angle compris entre 15 et 80° par rapport à la première ligne axiale (51), et qui c) présente un bandage (80) lequel est situé à l'extérieur du transducteur à ultrasons (58) sur le corps axial (50) et passe à travers le rayon principal (63), et
- un deuxième palpeur à rouleau (30) qui a) présente un corps axial (50) avec une deuxième ligne axiale (53) lequel est disposé de manière solidaire en rotation sur ledit bâti (20) et présente un évidement (52), qui b) a un transducteur à ultrasons (58) lequel présente un rayon principal (63) et est disposé dans ledit évidement (52) de telle manière que son rayon principal (63) s'étend à un angle compris entre 15 et 80° par rapport à la deuxième ligne axiale (53), et qui c) présente un bandage (80) lequel est situé à l'extérieur du transducteur à ultrasons (58) sur le corps axial (50) et passe à travers le rayon principal (63).

3. Dispositif selon la revendication 2, **caractérisé par le fait que** les bandages (80) présentent chacun une jante qui est logée à rotation sur le corps axial associé (50), et qu'un espace étanche au liquide est réalisé à l'intérieur de ladite jante.

4. Dispositif selon la revendication 2, **caractérisé par le fait qu'**un corps axial (50) au moins est disposé de manière réglable et/ou élastique sur ledit bâti (20).

5. Dispositif selon la revendication 2, **caractérisé par le fait que** sur ledit bâti (20) est prévu au moins un rouleau de guidage (32) qui roule sur l'une des deux tôles (44, 46).

6. Dispositif selon la revendication 2, **caractérisé par le fait que** lesdits transducteurs à ultrasons (58) des deux palpeurs à rouleau (28, 30) sont de construction identique.

7. Dispositif selon la revendication 2, **caractérisé par le fait que** les transducteurs à ultrasons (58) des deux palpeurs à rouleau (28, 30) présentent une fréquence supérieure à 1 MHz, en particulier supérieure à 2 MHz.

8. Dispositif selon la revendication 2, **caractérisé par le fait que** ledit bâti (20) présente un patin de guidage (34) qui peut être appliqué sur une projection de l'une des deux tôles (44, 46), laquelle s'étend parallèlement à la soudure à recouvrement (78).

9. Dispositif selon la revendication 2, **caractérisé par le fait qu'**une masse (64) se trouve entre chaque corps axial (50) et le transducteur à ultrasons associé (58), ladite masse amortissant aussi fortement que possible le couplage acoustique du transducteur à ultrasons (58) sur le corps axial (50).

10. Dispositif selon la revendication 2, **caractérisé par le fait que** chacun des transducteurs à ultrasons (58) est monté sur un corps de contact (54) en forme de coin et que ce corps de contact (54) présente une surface latérale cylindrique (56) qui coïncide avec l'allure d'une nappe cylindrique qui délimite le corps axial associé (50).
